# DEMANDE DE BREVET EUROPEEN

(11) **EP 0 913 603 A1**
(43) Date de publication de la demande: **06.05.1999**
(21) Numéro de dépôt: 97810804.1
(22) Date de dépôt: 28.10.1997
(51) Int. Cl.: F16H 48/20

(54) **Différentiel à action limitée**

(71) Demandeur: Schlaubitz, Philippe, 1023 Crissier (CH)
(72) Inventeur: Schlaubitz, Philippe, 1023 Crissier (CH)

(57) **Abrégé**

Le moment-moteur est transmis par le différentiel conventionel aux deux demi-arbre; l'arbre secondaire parallel du différentiel est entraìné par la roue Z1 qui engrène avec la roue Z2 du différentiel conventionel. Les demi-arbres entraìnent respectivement les roues Z4 et Z6 qui, à leur tour, entraìnent respectivement les roues Z3 et Z5. Le système de roue libre permet aux roues Z3 et Z5 de tourner moins vite mais pas plus vite que l'arbre secondaire.

Afin de rendre le système réversible (marche avant et arrière) il suffit d'ajouter deux roues libres agissant en sens inverse des deux premières. A l'aide d'un embrayage on peut ainsi activer le système pour la marche avant ou arrière.

## Description

### Domaines en question :

le différentiel est un des composants-clef de la chaîne cinématique utilisée dans les véhicules terrestres. Le différentiel intervient dans beaucoup de domaines :
- automobiles lourdes et légères
- camions de transport civils et militaires
- machines de chantiers sur roues
- véhicules tous terrains

### Etat technique actuel :

à ce jour, une bonne part des véhicules cités plus haut se contentent d'une chaîne cinématique moteur/roues motrices dans laquelle interviennent un ou plusieurs différentiels conventionnels ; ce ou ces derniers répartissent le moment-moteur en parts égales sur les deux demi-arbres de sortie du différentiel.
Les demi-arbres en question transmettent à leur tour le moment-moteur aux roues motrices du véhicule.
Le différentiel conventionnel permet au véhicule d'effectuer des virages sans obliger une roue à patiner. Néanmoins, un inconvénient majeur apparaît dès que l'adhérence entre les roues motrices et le sol ne suffit plus à transmettre la force motrice : sur routes enneigées, verglacées, dans les chemins boueux, il arrive souvent qu'lie roue motrice s'affole, la force motrice ne peut plus être transmise et le véhicule est voué à s'immobiliser.

Pour palier ce 〈〈 défaut 〉〉 du différentiel conventionnel, plusieurs systèmes mécaniques ont été développés , notamment:
- différentiel Torsen
- Torque proportionning differential (TPD)
- Limited slip differential (LSD)

Ces systèmes permettent de limiter de manière plus ou moins efficace l'emballement d'un demi-arbre, et ce grâce à l'augmentation des forces de frottement internes du différentiel 〈〈amélioré〉〉

Il existe aussi un système hybride appelé 〈〈 No Spinn 〉〉 ; celui-ci ne travaille pas sur le principe de frottements internes supplémentaires mais uniquement en transmettant le moment-moteur sur le demi-arbre gauche ou droite, selon les conditions d'utilisation (virages, faible adhérence d'une roue motrice). Le système No Spinn présente le même inconvénient lorsque la chaîne cinématique travaille en 〈〈 frein-moteur 〉〉 : une seule roue motrice assure le freinage d'où risque accru de perte de maîtrise du véhicule.

Comme exemple d'utilisation d'un de ces systèmes, je citerai le différentiel Torsen intégré dans la chaîne cinématique appelée 〈〈 quattro 〉〉 du constructeur automobile Audi permettant d'améliorer la motricité de ses voitures dans toutes les conditions d'utilisation.

### Problèmes à résoudre:

le système appelé 〈〈 OPTIDIF 〉〉 a été conçu de manière à augmenter la sécurité active des véhicules en supprimant totalement le défaut majeur du différentiel conventionnel (possibilité d'emballement d'un demi-arbre de sortie) sans utiliser le principe d'augmentation des forces de frottement internes comme c'est le cas dans les différents systèmes cités plus haut (Torsen, TPD, LSD).

Le système Optidif est une amélioration du différentiel conventionnel . En conditions normales d'utilisation, le résultat obtenu est identique au différentiel conventionnel ; à savoir répartition symétrique du moment moteur entre les deux demi-arbres de sortie.
Cependant, en conditions difficiles, le système Optidif fait varier instantanément et de façon continue (de 0% à 100%) la valeur du moment-moteur transmis par chaque demi-arbre du différentiel.
L'emballement d'un demi-arbre est impossible, même lorsqu'une roue motrice n'est plus en contact avec le sol.

### Caractéristiques de l'invention :

le système Optidif se présente sous forme de deux chaînes cinématiques identiques, reliant l'arbre moteur aux deux demi-arbres tout en gardant la transmission de base, soit le différentiel conventionnel.

Le système Optidif est composé de couples de roues dentées ainsi que de roues libres. En intégrant les propriétés cinématiques de ces différents composants de la mécanique simple il a été possible de créer un système répondant aux exigences requises.

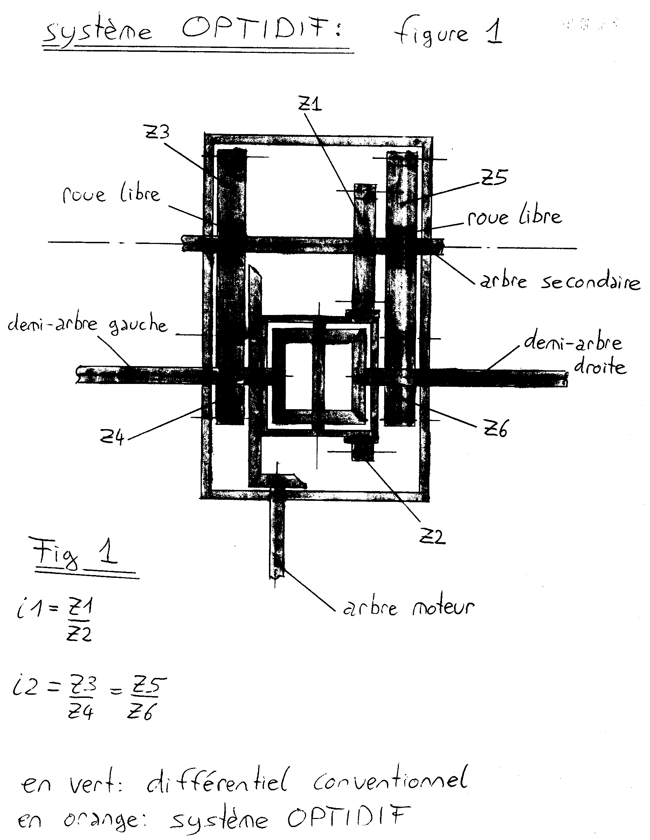

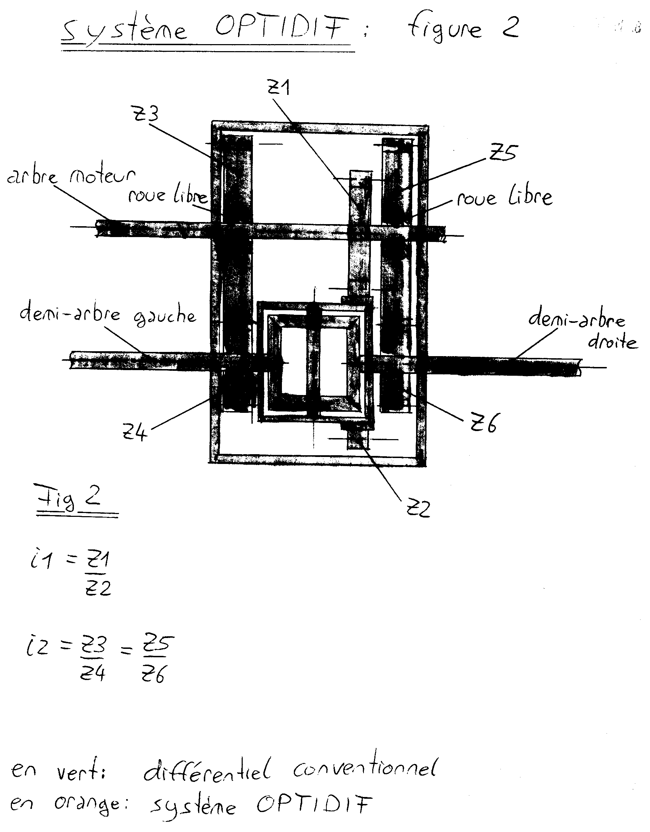

A l'aide du schéma de principe de la figure 1, on peut expliquer le fonctionnement du système Optidif :

en conditions normales, le moment-moteur est transmis par le différentiel conventionnel aux deux demi-arbres ; l'arbre secondaire est entraîné par la roue z1 qui engrène avec la roue z2, solidaire du différentiel conventionnel. Les demi-arbres entraînent respectivement les roues z4 et z6 qui, à leur tour, entraînent respectivement les roues z3 et z5. Le système de roue libre permet aux roues z3 et z5 de tourner moins vite mais pas plus vite que l'arbre secondaire. Dès qu'un demi-arbre tend à s'emballer, ce dernier est 〈〈 retenu 〉〉 par le système Optidif : Par exemple, le demi-arbre gauche tend à s'emballer : la fréquence de rotation de la roue z4 augmente et par là-même accroît la fréquence de la roue z3 ; dès que la fréquence de la roue z3 est égale à la fréquence de l'arbre secondaire, la roue libre rend ces derniers synchrones. Résultat : l' emballement du demi-arbre gauche est maîtrisé et le moment moteur ne pouvant être transmis est renvoyé sur l'autre demi-arbre par l'intermédiaire du différentiel conventionnel.
Le système étant symétrique, nous aurons a résultat identique avec le cas où l'autre demi-arbre tend à s'emballer.
Attention : ce schéma de principe est valable uniquement pour un sens de rotation de l'arbre-moteur; le système Optidif n'est pas directement réversible. Il est néanmoins facile de remédier à cet inconvénient : il suffit d'ajouter un débrayage aux deux roues libres. Dans ce cas de figure, l'utilisation de la marche arrière (sens de rotation inverse de l'arbre-moteur) se trouve dans les conditions d'un différentiel conventionnel.

Il est aussi possible de rendre la marche arrière identique à la marche avant : on ajoute lie seconde roue libre dont le sens 〈〈 bloqué 〉〉 est inversé à celui de la première roue libre à chaque chaîne cinématique du système Optidifet, par le jeu d'un embrayage, on utilise soit les deux roues libres 〈〈 marche avant 〉〉 ou alors les deux roues libres 〈〈 marche arrière 〉〉.

Remarque : Le rapport i1/i2 (voir fig. 1) est déterminé de manière à laisser travailler normalement le différentiel même dans le cas de virages serrés. En effet, les chemins de roulement étant différents pour chaque roue accouplée à son demi-arbre, il est impératif de garder une marge suffisante permettant la différence de rotation des demi-arbres avant la limitation exercée par le système Optidif.

### Avantages du système OPTIDIF :

par rapport aux autres systèmes de différentiels améliorées, Optidif présente les avantages suivants :
- transmission du moment-moteur par demi-arbre variable de 0 à 100%
- motricité assurée même lorsqu'une des roues motrices perd toute son adhérence (même soulevée du sol)
- proportion du moment-moteur toujours idéalement réparti entre les demi-arbres
- mêmes avantages lorsque le système travaille en frein-moteur
- sécurité active du véhicule accrue
- pas de frottements internes supplémentaires
- pas d'usure inutile des composants
- économie d'énergie puisque les frottements restent à leur niveau minimum

### Domaines préférentiels d'application :

l'utilisation du système Optidif pourrait être décisive dans tous les cas où des véhicules terrestres doivent évoluer dans des conditions précaires d'adhérence comme par exemple les bus, autocars, camions, véhicules forestiers, véhicules militaires sans oublier les voitures de tourisme.

## Revendications

1. le fonctionnement du système OPTIDIF requiert l'utilisation d'une base mécanique de type différentiel conventionnel.
le système Optidif se présente sous forme de deux chaînes cinématiques identiques, reliant l'arbre moteur aux deux demi-arbres tout en gardant la transmission de base, soit le différentiel conventionnel.
Le système Optidif est composé de couples de roues dentées ainsi que de roues libres. En intégrant les propriétés cinématiques de ces différents composants de la mécanique simple il a été possible de créer un système répondant aux exigences requises.
A l'aide du schéma de principe de la figure 1, on peut expliquer le fonctionnement du système Optidif :
en conditions normales, le moment-moteur est transmis par le différentiel conventionnel aux deux demi-arbres; l'arbre secondaire est entraîné par la roue z1 qui engrène avec la roue z2, solidaire du différentiel conventionnel. Les demi-arbres entraînent respectivement les roues z4 et z6 qui, à leur tour, entraînent respectivement les roues z3 et z5. Le système de roue libre permet aux roues z3 et z5 de tourner moins vite mais pas plus vite que l'arbre secondaire. Dés qu'un demi-arbre tend à s'emballer, ce dernier est 〈〈 retenu 〉〉 par le système Optidif : Par exemple, le demi-arbre gauche tend à s'emballer : la fréquence de rotation de la roue z4 augmente et par là-même accroît la fréquence de la roue z3 ; dès que la fréquence de la roue z3 est égale à la fréquence de l'arbre secondaire, la roue libre rend ces derniers synchrones. Résultat : l' emballement du demi-arbre gauche est maîtrisé et le moment-moteur ne pouvant être transmis est renvoyé sur l'autre demi-arbre par l'intermédiaire du différentiel conventionnel.
Le système étant symétrique, nous aurons un résultat identique avec le cas où l'autre demi-arbre tend à s'emballer.
Attention : ce schéma de principe est valable uniquement pour un sens de rotation de l'arbre-moteur; le système Optidif n'est pas directement réversible. Il est néanmoins facile de remédier à cet inconvénient : il suffit d'ajouter un débrayage aux deux roues libres. Dans ce cas de figure, l'utilisation de la marche arrière (sens de rotation inverse de l'arbre-moteur) se trouve dans les conditions d'un différentiel conventionnel.
Il est aussi possible de rendre la marche arrière identique à la marche avant : on ajoute une seconde roue libre dont le sens 〈〈 bloqué 〉〉 est inversé à celui de la première roue libre à chaque chaîne cinématique du système Optidif et , par le jeu d'un embrayage, on utilise soit les deux roues libres 〈〈 marche avant 〉〉 ou alors les deux roues libres 〈〈 marche arrière 〉〉.
Remarque : Le rapport i1/i2 (voir fig. 1) est déterminé de manière à laisser travailler normalement le différentiel même dans le cas de virages serrés. En effet, les chemins de roulement étant différents pour chaque roue accouplée à son demi-arbre, il est impératif de garder une marge suffisante permettant la différence de rotation des demi-arbres avant la limitation exercée par le système Optidif.
Selon la configuration du différentiel conventionnel, l'arbre secondaire peut être différent de l'arbre-moteur (Fig. 1) ou confondu (Fig. 2).
